(19) Europäisches Patentamt
European Patent Office
Office européen des brevets

(11) EP 1 197 328 A2

(12) EUROPÄISCHE PATENTANMELDUNG

(43) Veröffentlichungstag:
**17.04.2002 Patentblatt 2002/16**

(51) Int Cl.[7]: **B32B 27/36**

(21) Anmeldenummer: **01122697.4**

(22) Anmeldetag: **01.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **14.10.2000 DE 10051082**

(71) Anmelder: **Mitsubishi Polyester Film GmbH
65203 Wiesbaden (DE)**

(72) Erfinder:
- **Bartsch, Stefan, Dr.
65199 Wiesbaden (DE)**
- **Müller-Roosen, Martin, Dr.
55128 Mainz (DE)**
- **Pfeiffer, Herbert, Dr. Professor
55126 Mainz (DE)**

(74) Vertreter: **Schweitzer, Klaus, Dr. Dipl.-Chem. et al
Patentanwaltskanzlei Zounek
Industriepark Kalle-Albert
Gebäude H391
Rheingaustrasse 190
65203 Wiesbaden (DE)**

(54) **Zumindest einseitig matte, biaxial orientierte Polyesterfolie**

(57) Die Erfindung betrifft eine zumindest einseitig matte, biaxial orientierte Polyesterfolie bestehend aus mindestens einer Basisschicht (B), aus thermoplastischem Polyester und mindestens einer auf dieser Basisschicht (B) aufgebrachten matten Deckschicht (A), die zu mindestens 70 Gew-% aus thermoplastischem Polyester besteht. Die Deckschicht (A) zeichnet sich durch eine charakteristische matte Oberfläche bzw. Optik aus und ist für die Verwendung als Verpackungsfolie oder für Anwendungen im industriellen Sektor gut geeignet. Die Erfindung betrifft weiterhin ein Verfahren für die Herstellung der Folie und ihre Verwendung.

EP 1 197 328 A2

## Beschreibung

Die Erfindung betrifft eine zumindest einseitig matte, koextrudierte, biaxial orientierte Polyesterfolie bestehend aus mindestens einer Basisschicht (B) aus einem thermoplastischen Polyester und mindestens einer auf dieser Basisschicht (B) aufgebrachten matten Deckschicht (A), die mindestens 70 Gew.-% thermoplastischen Polyester enthält, bezogen auf das Gesamtgewicht der matten Deckschicht (A). Die Deckschicht (A) zeichnet sich durch eine charakteristische matte Oberfläche bzw. Optik aus und ist für die Verwendung als Verpackungsfolie oder für Anwendungen im industriellen Sektor gut geeignet. Die Erfindung betrifft weiterhin ein Verfahren für die Herstellung der Folie und ihre Verwendung.

Die Verpackungsindustrie hat einen hohen Bedarf an transparenten, hochglänzenden Kunststofffolien, wie z.B. biaxial orientierte Polypropylen- oder biaxial orientierte Polyesterfolien. Daneben besteht in zunehmendem Maße ein Bedarf an solchen transparenten Folien, bei denen zumindest eine Oberflächenschicht nicht hochglänzend ist, sondern sich durch ein charakteristisches mattes Erscheinungsbild auszeichnet und dadurch z.B. der Verpackung ein besonderes attraktives und damit werbewirksames Aussehen verleiht.

In der EP-A 347 646 wird eine biaxial orientierte Polyesterfolie beschrieben, die mindestens eine Deckschicht A aufweist, die einen Füllstoff in einer Konzentration von 0,5 bis 50 % enthält, wobei der Durchmesser dieses Füllstoffes in einem bestimmten Verhältnis zur Schichtdicke der Deckschicht A steht. Weiterhin weist die Deckschicht A eine bestimmte Dicke und einen bestimmten Kristallisationsgrad auf, der mit Hilfe der Raman-Spektroskopie ermittelt wird. Auf Grund der Topographie der Deckschicht A eignet sich die Folie insbesondere für magnetische Aufzeichnungsbänder. Über den erzielten Glanz der Deckschicht A gibt die Schrift keine Auskunft. Eine nach der EP-A 347 646 (Beispiel 1) hergestellte Folie hatte nicht die gewünschte matte Oberfläche. Der Glanz dieser Oberfläche lag außerhalb dem in dieser Schrift beanspruchten Bereich.

In der EP-A-0 053 498 wird eine mehrschichtige, biaxial orientierte Polyesterfolie beschrieben, die eine transparente Basisschicht und auf mindestens einer Seite dieser Schicht eine matt scheinende weitere Schicht aufweist. Die matt scheinende Schicht besteht im Wesentlichen aus einem Polyethylenterephthalat-Copolyester, dessen Copolymeres, 1 bis 20 mol-%

$$H(-OCH_2CH_2-)_n\ OH$$

oder

$$H(-OCH_2-CH_2-)_{n-1}O-C_6H_4-O-(CH_2-CH_2O-)_{n-1}H$$

oder

$$H(-OCH_2-CH_2-)_{n-1}O-C_6H_4-X-C_6H_4-O-(CH_2-CH_2O-)_{n-1}H$$

(n ist eine ganze Zahl von 2 bis 140, X steht für $-CH_2-$,$-C(CH_3)_2-$ oder $-SO_2-$) und inerte organische Partikel mit einem mittleren Durchmesser von 0,3 bis 20 μm in einer Konzentration von 3 bis 40 % enthält, bezogen auf die matt scheinende Schicht. Die Folie zeichnet sich durch einen hohen Mattgrad (Glanz kleiner 15) und eine für gewisse Anwendungen noch akzeptable Transparenz (größer als 60%) aus. Nachteilig an dieser Folie ist, dass sie im Fall einer ABA-Struktur nicht bedruckbar und im Fall einer AB-Struktur nicht (auf schnelllaufenden Maschinen) zu verarbeiten ist. Außerdem weist sie Mängel bei der Herstellung auf und sie ist für viele Anwendungen zu trüb.

Ebenfalls bekannt sind nach dem Stand der Technik matte, milchig scheinende, biaxial orientierte Polyesterfolien.

In der DE-A 23 53 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr eingesetzt werden kann, da ansonsten die Folie gelb wird. Das Verfahren ist damit aber unwirtschaftlich und die mit Regenerat produzierte, gelbliche Folie konnte sich am Markt nicht durchsetzen. Bei Erhöhung der Konzentration des Mischpolymeren im Polyester verliert die Folie im Allgemeinen ihren milchigen Charakter und wird weiß mit hoher Opazität.

In der US-PS 3,154,461 wird ein Verfahren zur Herstellung einer biaxial orientierten Folie aus thermoplastischem Kunststoff (z.B. Polyethylenterephthalat, Polypropylen) mit matter Oberfläche beansprucht, bei dem die Folie inkompressible Partikel (z.B. Calciumcarbonat, Siliciumdioxid) in einer Größe von 0,3 bis 20 µm und in einer Konzentration von 1 bis 25 % enthält. Weiterhin ist in dieser Anmeldung die matte Folie, hergestellt nach dem dort angegebenen Verfahren, beansprucht. Für viele Anwendungen ist die nach dem Verfahren der US-PS hergestellte Folie aber zu trüb.

Aufgabe der vorliegenden Erfindung war es daher, eine zumindest einseitig matte, biaxial orientierte Polyesterfolie bereitzustellen, die die Nachteile der genannten Folien nach dem Stand der Technik nicht aufweist und sich insbesondere durch einen hohen Mattgrad, bei gleichzeitig guter Transparenz, einer sehr guten Herstellbarkeit und einer sehr guten Verarbeitbarkeit auszeichnet. Außerdem soll dafür Sorge getragen werden, dass die Folie auch auf schnelllaufenden Verarbeitungsmaschinen verarbeitet werden kann. Bei der Herstellung der Folie soll weiterhin gewährleistet sein, dass bei der Folienherstellung anfallendes Verschnittmaterial als Regenerat in einer Menge von bis zu 60 Gew.-%, bezogen auf das Gesamtgewicht der Folie, wieder zu dem Herstellprozess zurückgeführt werden kann, ohne dass dabei die physikalischen und optischen Eigenschaften der Folie nennenswert negativ beeinflusst werden.

Die Aufgabe wird erfindungsgemäß durch die Bereitstellung einer koextrudierten, zumindest einseitig matten, biaxial orientierten Polyesterfolie mit mindestens einer Basisschicht (B) aus einem thermoplastischen Polyester und mindestens einer matten Deckschicht (A), die mindestens 70 Gew.-% thermoplastischen Polyester enthält, bezogen auf das Gesamtgewicht der Deckschicht (A), gelöst, wobei die Folie dadurch gekennzeichnet ist, dass ihre planare Orientierung $\Delta p$ kleiner/gleich 0,164 ist.

Die Unteransprüche geben bevorzugte Ausführungsformen der Erfindung an, die nachstehend näher erläutert werden. Erfindungsgemäß ist die Folie zumindest zweischichtig und umfaßt dann als Schichten die Basisschicht (B) und die matte Deckschicht (A).

Zur Erzielung eines hohen Mattgrades, bei gleichzeitig guter Transparenz, einer sehr guten Herstellbarkeit und einer sehr guten Verarbeitbarkeit der Folie muss entsprechend der Lösung der Aufgabe die planare Orientierung $\Delta p$ der erfindungsgemäßen Folie kleiner/gleich einem vorgegebenen Zahlenwert sein. Dieser Zahlenwert ist durch $\Delta p = 0{,}164$ festgelegt.

Für die Herstellung einer Folie mit geringem Glanz ist demzufolge eine vergleichsweise niedrige planare Orientierung $\Delta p$ erforderlich. Ist die planare Orientierung $\Delta p$ der Folie größer als der oben angegebene Wert von 0,164, so ist der erzielte Mattgrad der Folie, bzw. der matten Deckschicht (A), die Transparenz und die Herstellbarkeit der Folie im Sinne der vorliegenden Erfindung schlecht. Ist-umgekehrt - die planare Orientierung $\Delta p$ der Folie kleiner als oder gleich wie der oben angegebene Wert, dann ist der Mattgrad der Folie, bzw. der matten Deckschicht (A), die Transparenz und die Herstellbarkeit der Folie im Sinne der vorliegenden Erfindung gut.

In einer bevorzugten Ausführungsform der Erfindung beträgt die planare Orientierung $\Delta p$ der erfindungsgemäßen Folie weniger als 0,161 und in einer besonders bevorzugten Ausführungsform weniger als 0,158.

In der bevorzugten und der besonders bevorzugten Ausführungsform zeichnet sich die erfindungsgemäße, zumindest einseitig matte Folie durch einen vergleichsweise besonders hohen Mattgrad, eine vergleichsweise besonders hohe Transparenz und eine vergleichsweise besonders gute Herstellbarkeit aus.

Die Basisschicht (B) der Folie enthält bevorzugt mindestens 90 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol-und Naphthalin-2,6-dicarbonsäure-Einheiten bestehen. In einer ganz bevorzugten Ausführungsform besteht die Basisschicht Polyethylenterephthalat-Homopolymer. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren, beispielsweise Naphthalin-1,4- oder 1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x, x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Matte Deckschicht (A):

Für die matte Deckschicht (A) und für eine optionale weitere Deckschicht (C) können prinzipiell die gleichen Polymere verwendet werden, wie für die Basisschicht (B). Daneben können in den Deckschichten aber auch andere Materialien enthalten sein, wobei dann die Deckschichten bevorzugt aus einem Gemisch von Polymeren, einem Copolymeren oder einem Homopolymeren besteht, welches Ethylen-isophthalat-Einheiten und/oder Ethylen-2,6-naphthalat-Einheiten und/oder Ethylen-terephthalat-Einheiten enthalten. Bis zu 30 Mol-% der Polymere können aus weiteren Comonomeren bestehen.

Zur Erzielung der gewünschten Mattheit/des gewünschten Mattgrades enthält die Deckschicht (A) in einer günstigen Ausführungsform ein bestimmtes Pigmentsystem in einer wirksamen Menge von 1,0 bis 10,0 Gew.- %, bezogen auf das Gesamtgewicht der matten Deckschicht (A). In einer besonders günstigen Ausführungsform der Folie beträgt die Partikelkonzentration 1,1 bis 9,0 Gew.-% und in einer ganz besonders günstigen Ausführungsform 1,2 bis 8,0 Gew.-%.

Typische den Mattgrad der Folie begünstigende Partikelsysteme sind anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polymerpartikeln, z.B. Polystyrol-oder Acrylat-Partikeln.

Daneben können auch Mischungen von zwei und mehreren verschiedenen Partikelsystemen oder Mischungen von Partikelsystemen in gleicher chemischer Zusammensetzung, aber unterschiedlicher Partikelgröße gewählt werden. Die Partikeln können den Polymeren der einzelnen Schichten der Folie in den jeweils vorteilhaften Konzentrationen, z.B. als glykolische Dispersion während der Polykondensation oder über Masterbatche bei der Extrusion zugegeben werden.

Die matte Deckschicht (A) wird zur Erzielung des gewünschten niedrigen Glanzes vergleichsweise hoch mit inerten Pigmenten gefüllt. Die Konzentration der inerten Partikeln in den jeweiligen Schichten liegt in der besonders günstigen Ausführungsform im Bereich zwischen 1,1 und 7,5 Gew.-% und in der ganz besonders günstigen Ausführungsform zwischen 1,2 und 5,0 Gew.-% und richtet sich im Wesentlichen nach den zu erzielenden optischen Eigenschaften der Folie.

Bevorzugte Partikeln sind $SiO_2$ in kolloidaler und in kettenartiger Form. Diese Partikeln werden sehr gut in die Polymermatrix eingebunden.

Zur Erzielung eines möglichst hohen Mattgrades (d.h. eines möglichst geringen Glanzes) und zur Erzielung einer guten Herstellbarkeit enthält die Deckschicht (A) ein Pigmentsystem, bei dem der mittlere Durchmesser (der $d_{50}$-Wert) der Pigmentkörner im Bereich von 2,0 bis 8,0 µm liegt und die Streuung des Durchmessers der Pigmentkörner, ausgedrückt durch den SPAN 98, kleiner/gleich 1,9 ist.

In einer besonders günstigen Ausführungsform enthält die matte Deckschicht (A) der Folie gemäß der vorliegenden Erfindung ein Pigmentsystem, bei dem der mittlere Durchmesser der Pigmentkörner im Bereich von 2,1 bis 7,9 µm liegt und die Streuung kleiner/gleich 1,8 ist. In einer ganz besonders günstigen Ausführungsform enthält die matte Deckschicht (A) der Folie gemäß der vorliegenden Erfindung ein Pigmentsystem, bei dem der mittlere Durchmesser der Pigmentkörner im Bereich von 2,2 bis 7,8 µm liegt und die Streuung kleiner/gleich 1,7 ist.

In einer anderen günstigen Ausführungsform enthält die matte Deckschicht (A) neben dem Polyethylenterephthalat-Homopolymer oder dem Polyethylenterephthalat Copolymer eine weitere polymere Komponente I. Diese Komponente I ist ein Copolymer, welches aus dem Kondensationsprodukt der folgenden Monomeren bzw. deren zur Bildung von Polyestern befähigten Derivaten besteht:

a) 65 bis 95 Mol-% Isophthalsäure;
b) 0 bis 30 Mol-% wenigstens einer aliphatischen Dicarbonsäure mit der Formel $HOOC(CH_2)_nCOOH$, wobei n im Bereich von 1 bis 11 liegt;
c) 5 bis 15 Mol-% wenigstens eines Sulfomonomeren enthaltend eine Alkalimetallsulfonatgruppe an dem aromatischen Teil einer Dicarbonsäure;
d) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente I bildenden Monomeren. Zur ausführlichen Beschreibung der Komponente I siehe auch die EP-A-0 144 878, auf die hier ausdrücklich Bezug genommen wird.

Komponente I wird zweckmäßig als eine weitere polymere Komponente der matten Deckschicht (A) zugefügt, wobei der Gewichtsanteil bis zu 30 Gew.-% ausmachen kann. Die Komponente I bildet in diesem Fall mit den anderen in dieser Schicht vorhandenen Polymeren ein Blend oder eine Mischung oder aber auch ein Copolymeres durch Umesterung in der Extrusion.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepresste Formkörper kleiner Größe, z.B. linsen- oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die Komponente I und das entsprechende Polymere für die jeweilige Schicht jeweils für sich getrennt dem Extruder für die Basisschicht/andere Schicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten, welcher nicht mehr in die ursprünglichen Bestandteilen zerlegt werden kann. Ein Blend weist Eigenschaften wie ein homogener Stoff auf und kann entsprechend durch geeignete Parameter charakterisiert werden.

Die matte Deckschicht (A) wird in einer günstigen Ausführungsform durch den folgenden Satz von Parametern gekennzeichnet:

a) die Rauigkeit der Folie, ausgedrückt durch ihren $R_a$-Wert, liegt im Bereich von 150 bis 1000 nm, bevorzugt von 175 bis 950 nm, besonders bevorzugt von 200 bis 900 nm. Kleinere Werte als 150 nm haben negative Auswirkungen auf den Mattheitsgrad der Oberfläche, größere Werte als 1000 nm beeinträchtigen die optischen Eigenschaften der Folie.

b) Der Messwert der Oberflächengasströmung liegt im Bereich von 1 bis 50 s, bevorzugt im Bereich von 1 bis 45 s. Bei Werten oberhalb von 50 wird der Mattheitsgrad der Folie negativ beeinflusst.

Die Basisschicht (B) kann ebenfalls zusätzlich übliche Additive, wie beispielsweise Stabilisatoren und/oder Pigmente (=Füller) enthalten. Als Stabilisatoren werden vorteilhaft beispielsweise Phosphorverbindungen, wie Phosphorsäure oder Phosphorsäureester, eingesetzt.

Typische Pigmente (Füller) für die Basisschicht (B) sind wie für die Deckschicht(en) angegebene anorganische und/oder organische Partikeln, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol-oder Acrylat-Partikeln.

In einer besonders vorteilhaften Ausführungsform enthält die Basisschicht nur die über das Regenerat eingebrachten Pigmente. Hierdurch wird eine Folie mit ganz besonders niedriger Trübung hergestellt.

In der vorteilhaften Verwendungsform besteht die Folie aus drei Schichten, der Basisschicht (B) und beidseitig auf dieser Basisschicht aufgebrachten Deckschichten (A) und (C), wobei zumindest die Deckschicht (A) matt ist, und wobei die Folie nach dem erfindungsgemäßen Verfahren hergestellt wird.

Zwischen der Basisschicht (B) und den Deckschichten (A) und/oder (C) kann sich gegebenenfalls noch eine Zwischenschicht befinden. Diese kann wiederum aus den für die Basisschicht (B) beschriebenen Polymeren bestehen. In einer besonders bevorzugten Ausführungsform besteht die Zwischenschicht aus dem für die Basisschicht (B) verwendeten Polyester. Die Zwischenschicht kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere im Bereich von 1,0 bis 10 µm, besonders bevorzugt im Bereich von 1,0 bis 5 µm.

Bei der besonders vorteilhaften dreischichtigen Ausführungsform der erfindungsgemäßen Folie liegt die Dicke der Deckschichten (A) und (C) im allgemeinen im Bereich von 0,1 bis 5,0 µm, bevorzugt im Bereich von 0,2 bis 4,5 µm und besonders bevorzugt im Bereich von 0,3 bis 4,0 µm, wobei die matte Deckschichten (A) und die Deckschicht (C) gleich oder verschieden dick sein können.

Die Gesamtdicke der erfindungsgemäßen Polyesterfolie kann innerhalb bestimmter Grenzen variieren. Sie liegt im Bereich von 3 bis 350 µm, insbesondere von 4 bis 300 µm, vorzugsweise von 5 bis 250 µm, wobei auf die Basisschicht (B) ein Anteil von vorzugsweise 5 bis 97 % an der Gesamtdicke entfällt.

Die Erfindung betrifft auch ein Verfahren zum Herstellen der erfindungsgemäßen Polyesterfolie nach dem Koextrusionsverfahren.

Im Rahmen dieses Verfahrens wird so vorgegangen, dass die den einzelnen Schichten (A), (B) und ggf. (C) der Folie entsprechenden Schmelzen gemeinsam durch eine Flachdüse gepresst, d.h. koextrudiert, werden, die so erhaltene mehrschichtige Schmelze zur Verfestigung auf einer oder mehreren Walze/n abgezogen wird, die verfestigte Vorfolie anschließend biaxial gestreckt (orientiert), die biaxial gestreckte Folie thermofixiert und gegebenenfalls an der zur Behandlung vorgesehenen Oberflächenschicht noch corona- oder flammbehandelt und anschließend aufgewickelt wird.

Die biaxiale Streckung (Orientierung) wird im allgemeinen aufeinander folgend durchgeführt, wobei die aufeinander folgende biaxiale Streckung, bei der zuerst längs (in Maschinenrichtung) und dann quer (senkrecht zur Maschinenrichtung) gestreckt wird, bevorzugt ist. Die Biaxiale Streckung der Folie kann daneben aber auch in einer weiteren Ausführungsform des Verfahrens simultan erfolgen.

Zunächst wird, wie beim Koextrusionsverfahren üblich, das Polymere bzw. die Polymermischungen für die einzelnen Schichten in einem Extruder komprimiert und verflüssigt, wobei die gegebenenfalls als Zusätze vorgesehenen Additive bereits im Polymer bzw. in der Polymermischung enthalten sein können. Die Schmelzen werden dann gleichzeitig durch eine Flachdüse (Breitschlitzdüse) gepresst, und die ausgepresste mehrschichtige Schmelze wird auf einer oder mehreren gekühlten Abzugswalzen abgezogen, wobei die Schmelze abkühlt und sich zu einer Vorfolie verfestigt.

Die biaxiale Streckung wird im allgemeinen sequentiell durchgeführt. Dabei wird die Vorfolie vorzugsweise zuerst in Längsrichtung (d.h. in Maschinenrichtung, = MD-Richtung) und anschließend in Querrichtung (d.h. senkrecht zur Maschinenrichtung, = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperatur, bei der die Streckung durchgeführt wird, kann in einem relativ großen Bereich variieren und richtet sich nach den gewünschten Eigenschaften der Folie. Im allgemeinen wird die Längsstreckung bei einer Temperatur im Bereich von 80 bis 130 °C und die Querstreckung im Bereich von 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Nach dem Längsstrecken und vor dem Querstrecken kann man eine oder beide Oberfläche(n) der Folie nach bekannten Verfahren in-line beschichten. Die in-Line-Beschichtung kann beispielsweise zu einer verbesserten Haftung einer Metallschicht oder einer ggf. später aufzubringenden Druckfarbe, aber auch zur Verbesserung des antistatischen Verhaltens oder des Verarbeitungsverhaltens dienen.

Für die Herstellung einer Folie mit einem sehr hohen Mattgrad, einer verbesserten Transparenz und einer verbesserten Herstellbarkeit (die Folie neigt beim Verstrecken weniger zu Abrissen) hat es sich als erfindungswesentlich erwiesen, wenn die planare Orientierung $\Delta p$ der Folie kleiner/gleich $\Delta p = 0{,}164$ ist, bevorzugt kleiner/gleich $\Delta p = 0{,}161$, ganz bevorzugt kleiner/gleich $\Delta p = 0{,}158$. In diesem Fall wird die Rauigkeit der Folie erhöht, was sich in einem verbesserten Mattgrad äußert, die Pigmente werden besser in die Polymermatrix eingebunden, was sich in einer verbesserten Transparenz äußert, und die Festigkeit der Folie in Dickenrichtung wird größer, was sich in einer verbesserten Prozesssicherheit der Folie beim Herstellprozess äußert. Auf Grund der erhöhten Festigkeit in Dickenrichtung neigt die Folie während des Herstellprozesses weniger zum Ein-und Weiterreißen.

Es hat sich herausgestellt, dass die wesentlichen Einflussgrößen auf die planare Orientierung $\Delta p$ die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine.

Erhält man beispielsweise auf einer Folienanlage $\Delta p$-Werte, die oberhalb der erfindungsgemäßen Werte liegen (z.B. planare Orientierung $\Delta p = 0{,}171$), so können erfindungsgemäße Folien hergestellt werden, indem man in der Längsstreckung und in der Querstreckung die Temperaturen erhöht und/oder in Längsstreckung und in der Querstreckung die Streckverhältnisse erniedrigt. Übliche Werte für die genannten Parameter bei Folien, die nicht für Mattfolien gemäß der vorliegenden Erfindung verwendet werden können, sind z.B.

| | Längsstreckung | Querstreckung |
|---|---|---|
| Strecktemperaturen | 100 bis 115 °C | 100 bis 115 °C |
| Streckverhältnisse | 4,3 bis 5,0 | 4,2 bis 5,0 |

Bei den erfindungsgemäßen Folien liegen die Temperaturen und Streckverhältnisse im allgemeinen innerhalb von Bereichen, wie sie die unten stehende Tabelle wiedergibt:

| | Längsstreckung | Querstreckung |
|---|---|---|
| Strecktemperaturen | 120 bis 135 °C | 120 bis 140 °C |
| Streckverhältnisse | 2,5 bis 4,6 | 3,5 bis 4,1 |

Ein weiteres Absenken des Streckverhältnisses $\lambda_{MD}$ ist nicht möglich, da sich ansonsten in der Folie Defekte zeigen, die unerwünscht sind. Wird beispielsweise das Längsstreckverhältnis $\lambda_{MD}$ unterhalb einem Wert von 2,5 abgesenkt, so erhält man in der Folie Querschläge, die man z.B. nach dem Metallisieren der Folie deutlich in der Metallschicht sieht.

Erhält man beispielsweise mit einer Maschine einen $\Delta$p-Wert von 0,173 mit dem Parametersatz $\lambda_{MD}$ = 4,5 und $\lambda_{TD}$ = 4,2, den Strecktemperaturen in Längs- und in Querrichtung $T_{MD}$ = 114°C und $T_{TD}$ = 121°C, so erhält man durch Erhöhung der Längsstrecktemperatur auf $T_{MD}$ = 125 °C oder durch Erhöhung der Querstrecktemperatur auf $T_{TD}$ = 135 °C oder durch Absenkung des Längstreckverhältnisses auf $\lambda_{MD}$ = 3,8 oder durch Absenkung des Querstreckverhältnisses auf $\lambda_{TD}$ = 3,7 ein $\Delta$p-Wert von 0,162. Die Folienbahngeschwindigkeit betrug hierbei 340 m/min und der SV-Wert des Materials etwa 730. Die angegeben Temperaturen beziehen sich beim Längsstrecken auf die jeweiligen Walzentemperaturen und beim Querstrecken auf die Folientemperaturen, die mittels IR (infrarot) gemessen wurden.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Als generelle Anweisung zur Erreichung der erfindungsgemäßen $\Delta$p-Werte verfährt man zweckmäßig so, dass man, ausgehend von einem Parametersatz, bei dem Folien mit nicht erfindungsgemäßen $\Delta$p-Werte erhalten werden, entweder

a) die Strecktemperatur in MD-Richtung um $\Delta$T = 3 bis 15 K erhöht, bevorzugt um $\Delta$T = 5 bis 12 K, besonders bevorzugt um $\Delta$T = 7 bis 10 K, oder

b) das Streckverhältnis in MD-Richtung um $\Delta\lambda$ = 0, 3 bis 0,8 erniedrigt, bevorzugt um $\Delta\lambda$ = 0,35 bis 0,7, besonders bevorzugt um $\Delta\lambda$ = 0,4 bis 0,6, oder

c) die Strecktemperatur in TD-Richtung um $\Delta$T = 4 bis 15 K erhöht, bevorzugt um $\Delta$T = 5 bis 12 K, besonders bevorzugt um $\Delta$T = 6 bis 10 K, oder

d) das Streckverhältnis in TD-Richtung um $\Delta\lambda$ = 0, 3 bis 0,8 erniedrigt, bevorzugt um $\Delta\lambda$ = 0,35 bis 0,7, besonders bevorzugt um $\Delta$l = 0, 4 bis 0,6.

Sofern zweckmäßig, können auch eine oder mehrere der obigen Maßnahmen a) bis d) miteinander kombiniert werden. Als besonders günstig hat es sich dabei erwiesen, die Maßnahmen a) und b) miteinander zu kombinieren.

In einer besonders günstigen Ausführungsform werden zur Herstellung der erfindungsgemäßen matten Folie mit einer planaren Orientierung von $\Delta$p kleiner/gleich 0,164 die Maßnahmen a) und b) derart miteinander kombiniert, dass zwischen der Strecktemperatur in MD-Richtung $T_{MD}$ und dem Streckverhältnis in MD Richtung folgender Bereich

eingehalten wird:

$$110+3{,}0\cdot\lambda_{MD} \leq T_{MD} \leq 110+5{,}0\cdot\lambda_{MD} \qquad \text{Gl. 1}$$

In **Figur 1** ist dieser Bereich durch den Streifen zwischen der oberen Geraden und der unteren Geraden dargestellt. Bei der Festlegung der Bedingungen kann man dabei wie oben angegeben vorgehen. Bei Einhalt von Gl. 1 ist gewährleistet, dass die Δp-Werte immer kleiner/gleich 0,164 sind und eine Folie mit optimiertem Mattgrad hergestellt wird.

Bei der nachfolgenden Thermofixierung wird die Folie über eine Zeitdauer von etwa 0,1 bis 10 s bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität wird dabei so eingestellt, dass sich eine Oberflächenspannung im Bereich von über 45 mN/m ergibt.

Zur Einstellung weiterer gewünschter Eigenschaften kann die Folie zusätzlich beschichtet werden. Typische Beschichtungen sind haftvermittelnd, antistatisch, schlupfverbessernd oder dehäsiv wirkende Schichten. Es bietet sich an, diese zusätzliche Schichten über In-line-Beschichtung mittels wässriger Dispersionen nach dem Streckschritt in Längsrichtung und vor dem Streckschritt in Querrichtung auf die Folie aufzubringen.

Die erfindungsgemäße, zumindest einseitig matte Folie zeichnet sich durch hervorragende optische Eigenschaften, d.h., durch einen niedrigen Glanz bei gleichzeitig hoher Transparenz aus, einer sehr guten Herstellbarkeit und durch ein sehr gutes Verarbeitungsverhalten.

Daneben ist bei der Herstellung der Folie gewährleistet, dass während der Herstellung anfallendes Verschnittmaterial als Regenerat in einer Menge im Bereich von bis zu 70 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild.

Die Folie eignet sich demnach ganz hervorragend für den Einsatz in der flexiblen Verpackung und zwar insbesondere dort, wo ihre hervorragenden optischen Eigenschaften und ihre gute Verarbeitbarkeit voll zum Tragen kommt. Dies ist insbesondere ihr Einsatz auf schnelllaufenden Verpackungsmaschinen.

Die nachstehende Tabelle (Tabelle 1) fasst die wichtigsten erfindungsgemäßen Folieneigenschaften noch einmal auf einen Blick zusammen.

Tabelle 1

| | Bereich | | | Einheit | Messmethode |
|---|---|---|---|---|---|
| | allgemein | bevorzugt | besonders bevorzugt | | |
| **DECKSCHICHT A** | | | | | |
| Glanz, 60° | < 80 | < 70 | < 60 | | DIN 67530 |
| COF | < 0,6 | < 0,5 | < 0,40 | | DIN 53375 |
| Mittlere Rauigkeit $R_a$ | 150 bis 1000 | 175 bis 950 | 200 bis 900 | nm | DIN 4768, Cut-off von 0,25 mm |
| Messwertbereich für die Oberflächen-Gasströmung | 1 bis 50 | 1 bis 45 | | sec | intern |
| **Folieneigenschaften** | | | | | |
| Trübung | < 50 | < 45 | < 40 | % | ASTM-D 1003-52 |
| Planare Orientierung Δp | ≤ 0,164 | ≤ 0,161 | ≤ 0,158 | | intern |

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}907 \times 10^{-4}\ SV\ (DCE) + 0{,}063096$$

**Reibung (COF)**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der so genannten Tintenmethode (DIN 53 364) bestimmt.

**Trübung**

Die Trübung nach Hölz wurde in Anlehnung an ASTM-D 1003-52 bestimmt, wobei jedoch zur Ausnutzung des optimalen Messbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezipienten einen Druckanstieg von 56 mbar zu bewirken.

| Messbedingungen: | |
|---|---|
| Messfläche | 45,1 $cm^2$ |
| Anpressgewicht | 1276 g |
| Lufttemperatur | 23 °C |
| Luftfeuchte | 50 % relative Feuchte |
| Gassammelvolumen | 1,2 $cm^3$ |
| Druckintervall | 56 mbar |

**Bestimmung der planaren Orientierung $\Delta p$**

Die Bestimmung der planaren Orientierung erfolgt über die Messung der Brechungsindizes mit dem Abbe-Refraktometer nach der internen Betriebsvorschrift 24.

| Probenvorbereitung: | |
|---|---|
| Probengröße und Probenlänge<br>Probenbreite | 60 bis 100 mm<br>entspricht Prismenbreite von 10 mm |

Zur Bestimmung von $n_{MD}$ und $n_a$ (=$n_z$) muss die zu messende Probe aus der Folie ausgeschnitten werden, bei der die Laufkante der Probe exakt mit der TD-Richtung übereinstimmen muss. Zur Bestimmung von $n_{TD}$ und $n_a$ (=$n_z$) muss die zu messende Probe aus der Folie ausgeschnitten werden, bei der die Laufkante der Probe exakt mit der MD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Diiodmethan (N=1,745) bzw. Diiodmethan-Bromnaphthalin-Gemisch aufgetragen. Der Brechungsindex des Gemisches muss größer als 1,685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überflüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1,49 und 1,50 zu sehen ist.

Jetzt wird der Brechungsindex in $n_a$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_a$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Messung des mittleren Partikeldurchmessers $d_{50}$**

Die Bestimmung des mittleren Partikeldurchmessers $d_{50}$ wurde mittels Laser auf einem Malvern MasterSizer nach der Standardmethode durchgeführt (andere Messgeräte sind z.B. Horiba LA 500 oder Sympathec Helos, welche das gleiche Messprinzip verwenden). Die Proben wurden dazu in eine Küvette mit Wasser gegeben und diese dann in das Messgerät gestellt. Der Messvorgang ist automatisch und beinhaltet auch die mathematische Bestimmung des $d_{50}$-Wertes.

Der $d_{50}$-Wert wird dabei definitionsgemäß aus der (relativen) Summenkurve der Partikelgrößenverteilung bestimmt: Der Schnittpunkt des 50 % Ordinatenwertes mit der Summenkurve liefert auf der Abszissenachse sofort den gewünschten $d_{50}$-Wert, was in **Figur 2** graphisch genauer dargestellt ist.

**Messung der SPAN 98**

Die Bestimmung der SPAN 98 wurde mit dem gleichen Messgerät durchgeführt, wie oben bei der Bestimmung des mittleren Durchmessers $d_{50}$ beschrieben. Die SPAN 98 ist dabei wie folgt definiert:

$$SPAN98 = \frac{D_{98} - D_{10}}{D_{50}}$$

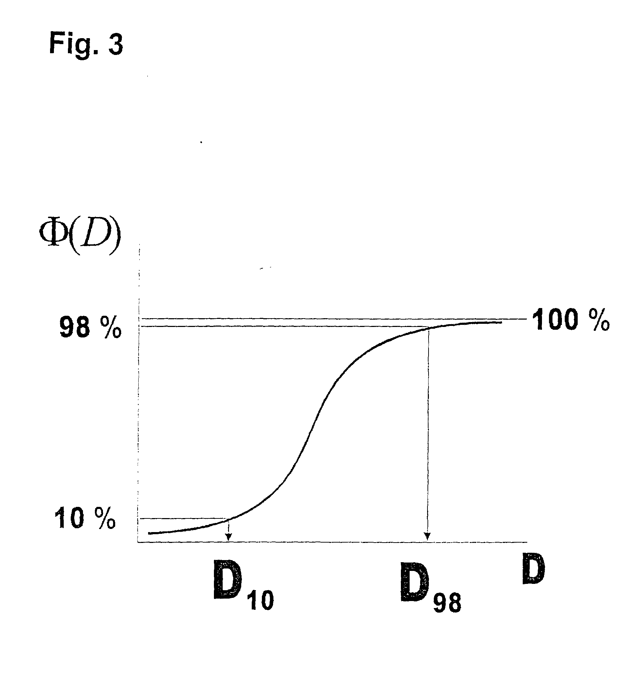

Für die Ermittlung von $d_{98}$ und $d_{10}$ wird wiederum die (relative) Summenkurve der Partikelgrößenverteilung zu Grunde gelegt. Der Schnittpunkt des 98 % Ordinatenwertes mit der Summenkurve liefert auf der Abszissenachse sofort den gewünschten $d_{98}$-Wert und der Schnittpunkt des 10 % Ordinatenwertes der Summenkurve liefert auf der Abszissenachse sofort den gewünschten $d_{10}$-Wert, was in **Figur 3** graphisch genauer dargestellt ist.

Beispiel 1

Chips aus Polyethylenterephthalat (hergestellt über das Umesterungsverfahren mit Mn als Umesterungskatalysator, Mn-Konzentration: 100 ppm) wurden bei einer Temperatur von 150 °C auf eine Restfeuchte von unterhalb 100 ppm getrocknet und dem Extruder für die Basisschicht (B) zugeführt. Ebenfalls wurden Chips aus Polyethylenterephthalat und einem Füllstoff dem Extruder für die nicht matte Deckschicht (C) zugeführt.

Daneben wurden Chips aus einem Polyethylenterephthalat (hergestellt über das Umesterungsverfahren mit Mn als Umesterungskatalysator, Mn-Konzentration: 100 ppm) bei einer Temperatur von 150 °C auf eine Restfeuchte von unterhalb 100 ppm getrocknet und zusammen mit dem erfindungsgemäßen Füllstoff dem Extruder für die matte Deckschicht (A) zugeführt.

Dann wurde durch Koextrusion und anschließende stufenweise Orientierung in Längs- und Querrichtung eine transparente, dreischichtige Folie mit ABC-Aufbau und einer Gesamtdicke von 12 µm hergestellt. Die Dicke der jeweiligen Deckschichten ist der Tabelle 2 zu entnehmen.

Deckschicht (A), Mischung aus:

| | |
|---|---|
| 40 Gew.-% | Polyethylenterephthalat mit einem SV-Wert von 800 |
| 60 Gew.-% | Masterbatch aus 95 Gew.-% Polyethylenterephthalat und 5,0 Gew.-% Kieselsäurepartikel (® Sylysia 430 von der Fa. Fuji/Japan) mit einem $d_{50}$-Wert von 3,4 µm und einer SPAN 98 von 1,4. |

Basisschicht (B):

| | |
|---|---|
| 100,0 Gew.-% | Polyethylenterephthalat mit einem SV-Wert von 800 |

Deckschicht (C), Mischung aus:

| | |
|---|---|
| 93,0 Gew.-% | Polyethylenterephthalat mit einem SV-Wert von 800 |
| 7,0 Gew.-% | Masterbatch aus 97,75 Gew.-% Polyethylenterephthalat, 1,0 Gew.-% ® Sylobloc 44 H (synthetisches $SiO_2$ der Fa. Grace) und 1,25 Gew.-% ® Aerosil TT 600 (pyrogenes $SiO_2$ der Fa. Degussa) |

Die Herstellungsbedingungen in den einzelnen Verfahrensschritten waren:

| | | | | |
|---|---|---|---|---|
| Extrusion | Temperaturen | A-Schicht | 290 | °C |
| | | B-Schicht | 290 | °C |
| | | C-Schicht | 290 | °C |
| | Temperatur der Abzugswalze | | 25 | °C |
| Längsstreckung | Strecktemperatur: | | 125 | °C |
| | Längsstreckverhältnis: | | 4,1 | |
| Querstreckung | Strecktemperatur: | | 130 | °C |
| | Querstreckverhältnis | | 3,9 | |
| Fixierung | Temperatur: | | 230 | °C |
| | Dauer: | | 3 | s |

Die planare Orientierung lag mit Δp = 0,159 im erfindungsgemäßen Bereich. Die Folie hatte den geforderten niedrigen Glanz und die geforderte niedrige Trübung. Weiterhin konnte die Folie sehr gut, d.h. abrissfrei hergestellt werden und zeigte außerdem das gewünschte Verarbeitungsverhalten. Der Folienaufbau und die erzielten Eigenschaften derart hergestellter Folien sind in den Tabellen 2 und 3 dargestellt.

Beispiel 2

Im Vergleich zu Beispiel 1 wurde die Deckschichtdicke der matten Deckschicht (A) von 1,5 auf 2,0 μm bei sonst identischem Folienaufbau und identischer Herstellungsweise angehoben. Der Mattgrad der Folie hat sich hierdurch verbessert.

Beispiel 3

Im Vergleich zu Beispiel 1 wurde jetzt eine 23 μm dicke Folie produziert. Hierdurch bedingt wurde die Geschwindigkeit der Maschine um den Dickenfaktor abgesenkt (Ausstoß ist konstant geblieben). Um die erfindungsgemäße planare Orientierung zu erhalten, wurden die Verfahrensbedingungen leicht modifiziert. Die Deckschichtdicke der matten Schicht (A) betrug 2,5 μm und diejenige der nicht matten Schicht (C) betrug 2,0 μm. Hierdurch konnte der Glanz der Folie weiter herabgesenkt werden.

| | | | | |
|---|---|---|---|---|
| Extrusion | Temperaturen | A-Schicht: | 290 | °C |
| | | B-Schicht: | 290 | °C |
| | | C-Schicht: | 290 | °C |
| | Temperatur der Abzugswalze | | 25 | °C |
| Längsstreckung | Strecktemperatur: | | 124 | °C |
| | Längsstreckverhältnis: | | 4 | |
| Querstreckung | Strecktemperatur: | | 129 | °C |
| | Querstreckverhältnis | | 3,9 | |
| Fixierung | Temperatur: | | 230 | °C |
| | Dauer: | | 3 | s |

Beispiel 4

Im Vergleich zu Beispiel 3 wurde die Zusammensetzung für die matt scheinende Deckschicht (A) geändert. Anstelle des Polyethylenterephthalat mit einem SV-Wert von 800 wurden jetzt 20 Gew.-% der polymeren Komponente I der matt scheinenden Deckschicht (A) zugegeben. Die Komponente I setzt sich dabei wie folgt zusammen:

a) 90 Mol-% Isophthalsäure;
b) 10 Mol-% Natrium-5-sulfoisophthalsäure;
c) 100 Mol-% Ethylenglykol.

Durch die Zuführung der Komponente I in die matte Deckschicht (A) wurde die Transparenz der Folie weiter verbessert.
Deckschicht (A), Mischung aus:

| | |
|---|---|
| 20 Gew.-% | Polyethylenterephthalat mit einem SV-Wert von 800 |
| 20 Gew.-% | Komponente I |
| 60 Gew.-% | Masterbatch aus 95 Gew.-% Polyethylenterephthalat und 5,0 Gew.-% Kieselsäurepartikel (®Sylysia 430 von der Fa. Fuji/Japan) mit einem $d_{50}$-Wert von 3,4 μm und einer SPAN 98 von 1,4. |

Vergleichsbeispiel 1

Im Vergleich zu Beispiel 1 wurde jetzt die Folie derart hergestellt, dass die erfindungsgemäße Bedingung, dass die planare Orientierung Δp kleiner/gleich 0,164 ist, verletzt wurde. Die Herstellungsbedingungen in den einzelnen Verfahrensschritten waren:

| | | | | |
|---|---|---|---|---|
| Extrusion | Temperaturen | A-Schicht: | 290 | °C |
| | | B-Schicht: | 290 | °C |
| | | C-Schicht: | 290 | °C |
| Längsstreckung | Strecktemperatur: | | 115 | °C |
| | Längsstreckverhältnis: | | 4,4 | |
| Querstreckung | Strecktemperatur: | | 121 | °C |
| | Querstreckverhältnis | | 4,2 | |
| Fixierung | Temperatur: | | 230 | °C |
| | Dauer: | | 3 | s |

Der Mattgrad der Folie, die Transparenz der Folie und die Herstellbarkeit sind deutlich schlechter geworden.

Tabelle 2

| Beispiel | Foliendicke in µm | Folienaufbau | Schichtdicken in µm | | | Pigmente in den Schichten | | | mittlerer Pigment-Durchmesser in den Schichten in µm | | | Pigmentkonzentrationen in ppm | | |
|---|---|---|---|---|---|---|---|---|---|---|---|---|---|---|
| | | | A | B | C | A | B | C | A | B | C | A | B | C |
| B 1 | 12 | ABC | 1,5 | 9 | 15 | Sylysia 430 | kein | Sylobloc 44 H Aerosil TT 600 | 3,4 | | 2,5 0,04 | 30000 | 0 | 700 |
| B 2 | 12 | ABC | 2,0 | 8,5 | 15 | Sylysia 430 | kein | Sylobloc 44 H Aerosil TT 600 | 3,4 | | 2,5 0,04 | 30000 | 0 | 700 |
| B 3 | 23 | ABC | 2,5 | 18,5 | 20 | Sylysia 430 | kein | Sylobloc 44 H Aerosil TT 600 | 3,4 | | 2,5 0,04 | 30000 | 0 | 700 |
| B 4 | 23 | ABC | 2,5 | 18,5 | 20 | Sylysia 430 | kein | Sylobloc 44 H Aerosil TT 600 | 3,4 | | 2,5 0,04 | 30000 | 0 | 700 |
| VB 1 | 12 | ABC | 1,5 | 9 | 15 | Sylysia 430 | kein | Sylobloc 44 H Aerosil TT 600 | 3,4 | | 2,5 0,04 | 30000 | 0 | 700 |

Tabelle 3

| Beispiel | Reibung COF | Mittlere Rauigkeit $R_a$ | | Messwerte für die Ofl.-Gasströmung | | Δp | Glanz | | Trübung | Herstellverhalten |
|---|---|---|---|---|---|---|---|---|---|---|
| | C-Seite gegen C-Seite | A-Seite | C-Seite | A-Seite | C-Seite | | A-Seite | C-Seite | | |
| B 1 | 40 | 230 | 60 | 10 | 130 | 0,156 | 45 | 140 | 38 | ++ |
| B 2 | 40 | 250 | 60 | 8 | 130 | 0,156 | 40 | 142 | 39 | ++ |
| B 3 | 41 | 250 | 60 | 6 | 130 | 0,157 | 35 | 140 | 41 | ++ |
| B 4 | 40 | 250 | 60 | 6 | 130 | 0,157 | 32 | 140 | 32 | ++ |
| VB 1 | 45 | 210 | 50 | 15 | 135 | 0,166 | 55 | 150 | 55 | - |

Zeichenerklärung für das Herstellverhalten der Folien:

++: keine Abrisse, niedrige Herstellkosten

-: häufige Abrisse, hohe Herstellkosten der Folie

**Patentansprüche**

**1.** Zumindest einseitig matte, koextrudierte, biaxial orientierte Polyesterfolie bestehend aus mindestens einer Basisschicht (B) aus einem thermoplastischen Polyester und mindestens einer auf dieser Basisschicht (B) aufgebrachten matten Deckschicht (A), die mindestens 70 Gew.-% thermoplastischen Polyester enthält, bezogen auf das Gesamtgewicht der matten Deckschicht (A), **dadurch gekennzeichnet, dass** die planare Orientierung Δp der Folie kleiner/gleich 0,164 ist.

2. Zumindest einseitig matte Polyesterfolie nach Anspruch 1, **dadurch gekennzeichnet, dass** die planare Orientierung Δp der Folie bevorzugt kleiner/gleich 0,161, bevorzugt kleiner/gleich 0,158, ist.

3. Zumindest einseitig matte Polyesterfolie nach Anspruch 1 oder 2, **dadurch gekennzeichnet, dass** die matte Deckschicht (A) einen Glanz aufweist, der kleiner/gleich 80, bevorzugt kleiner/gleich 70, besonders bevorzugt kleiner/gleich 60, ist.

4. Zumindest einseitig matte Polyesterfolie nach einem der Ansprüche 1 bis 3, **dadurch gekennzeichnet, dass** die Folie eine Trübung aufweist, die kleiner/gleich 50, bevorzugt kleiner/gleich 45, besonders bevorzugt kleiner/gleich 40, ist.

5. Zumindest einseitig matte Polyesterfolie nach einem der Ansprüche 1 bis 4, **dadurch gekennzeichnet, dass** die matte Deckschicht (A) ein Pigmentsystem in einer wirksamen Menge im Bereich von 1,0 bis 10,0 Gew.- % enthält, bezogen auf das Gesamtgewicht der matten Deckschicht (A), bevorzugt von 1,1 bis 7,5 Gew.-%, besonders bevorzugt von 1,2 bis 5,0 Gew.-%.

6. Zumindest einseitig matte Polyesterfolie nach einem der Ansprüche 1 bis 5, **dadurch gekennzeichnet, dass** die matte Deckschicht (A) ein Pigmentsystem enthält, bei dem der mittlere Durchmesser (der $d_{50}$-Wert) der Pigmentkörner im Bereich von 2,0 bis 8,0 µm liegt und bei dem die Streuung des Durchmessers der Pigmentkörner, ausgedrückt durch den SPAN 98, kleiner/gleich 1,9 ist.

7. Zumindest einseitig matte Polyesterfolie nach einem der Ansprüche 1 bis 6, **dadurch gekennzeichnet, dass** die matte Deckschicht (A) neben Ethylenterephthalat-Homopolymer oder Ethylenterephthalat-Copolymer eine weitere polymere Komponente I enthält, die ein Copolymer ist, das aus dem Kondensationsprodukt der folgenden Monomeren bzw. deren zur Bildung von Polyestern befähigten Derivaten besteht:

   a) 65 bis 95 Mol-% Isophthalsäure;
   b) 0 bis 30 Mol-% wenigstens einer aliphatischen Dicarbonsäure mit der Formel $HOOC(CH_2)_nCOOH$, wobei n im Bereich von 1 bis 11 liegt;
   c) 5 bis 15 Mol-% wenigstens eines Sulfomonomeren enthaltend eine Alkalimetallsulfonatgruppe an dem aromatischen Teil einer Dicarbonsäure;
   d) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

   wobei die Prozentangaben jeweils bezogen sind auf die Gesamtmenge der die Komponente I bildenden Monomeren.

8. Zumindest einseitig matte Polyesterfolie nach einem der Ansprüche 1 bis 7, **dadurch gekennzeichnet, dass** die matte Deckschicht (A) die Komponente I in einer Menge von bis zu 30 Gew.-% enthält.

9. Zumindest einseitig matte Polyesterfolie nach einem der Ansprüche 1 bis 8, **dadurch gekennzeichnet, dass** die matte Deckschicht (A) eine Rauigkeit, ausgedrückt als ihr $R_a$-Wert, im Bereich von 150 bis 1000 nm, bevorzugt von 175 bis 950 nm, besonders bevorzugt von 200 bis 900 nm, besitzt und dass der Messwert der Oberflächengasströmung im Bereich von 1 bis 50 s, bevorzugt im Bereich von 1 bis 45 s, liegt.

10. Zumindest einseitig matte Polyesterfolie nach einem der Ansprüche 1 bis 9, **dadurch gekennzeichnet, dass** die Gesamtdicke der Polyesterfolie im Bereich von 3 bis 350 µm, insbesondere von 4 bis 300 µm, vorzugsweise von 5 bis 250 µm, liegt, wobei auf die Basisschicht (B) ein Anteil von vorzugsweise 5 bis 97 % an der Gesamtdicke entfällt.

11. Verfahren zum Herstellen einer zumindest einseitig matten Polyesterfolie nach einem der Ansprüche 1 bis 10 durch Koextrusion, bei der die den einzelnen Schichten (A), (B) und ggf. (C) der Folie entsprechenden Schmelzen gemeinsam durch eine Flachdüse gepresst werden, die so erhaltene mehrschichtige Schmelze zur Verfestigung auf einer oder mehreren Walze/n abgezogen wird, die verfestigte Vorfolie anschließend biaxial gestreckt, die biaxial gestreckte Folie thermofixiert und gegebenenfalls an der zur Behandlung vorgesehenen Oberflächenschicht noch corona- oder flammbehandelt und anschließend aufgewickelt wird, **dadurch gekennzeichnet, dass** die Längsstreckung bei einer Temperatur im Bereich von 80 bis 130 °C und die Querstreckung im Bereich von 90 bis 150 °C durchgeführt wird und dass das Längsstreckverhältnis im Bereich von 2,5:1 bis 6:1, bevorzugt von 3:1 bis 5,5:

1, liegt und das Querstreckverhältnis im Bereich von 3,0:1 bis 5,0:1, bevorzugt von 3,5:1 bis 4,5:1.

**12.** Verfahren nach Anspruch 11, **dadurch gekennzeichnet, dass** nach dem Längsstrecken und vor dem Querstrecken eine oder beide Oberfläche(n) der Folie in-line beschichtet werden.

**13.** Verfahren nach Anspruch 11 oder 12, **dadurch gekennzeichnet, dass** die Folie zum Thermofixieren über eine Zeitdauer im Bereich von 0,1 bis 10 s bei einer Temperatur im Bereich von 150 bis 250 °C gehalten wird.

**14.** Verfahren nach einem der Ansprüche 11 bis 13, **dadurch gekennzeichnet, dass** zwischen der Strecktemperatur in MD-Richtung $T_{MD}$ und dem Streckverhältnis in MD Richtung $\lambda_{MD}$ folgender Bereich eingehalten wird:

$$110+3{,}0\cdot\lambda_{MD}\leq T_{MD}\leq 110+5{,}0\cdot\lambda_{MD}.$$

**15.** Verfahren nach einem der Ansprüche 11 bis 14, **dadurch gekennzeichnet, dass** bei der Herstellung der Folie während der Herstellung anfallendes Verschnittmaterial als Regenerat in einer Menge im Bereich von 20 bis 70 Gew.-%, bezogen auf das Gesamtgewicht der Folie, wieder der Extrusion zugeführt wird.

**16.** Verwendung einer zumindest einseitig matte Polyesterfolie nach einem der Ansprüche 1 bis 10 für den Einsatz in der flexiblen Verpackung, insbesondere für den Einsatz auf schnelllaufenden Verpackungsmaschinen.

Fig. 1

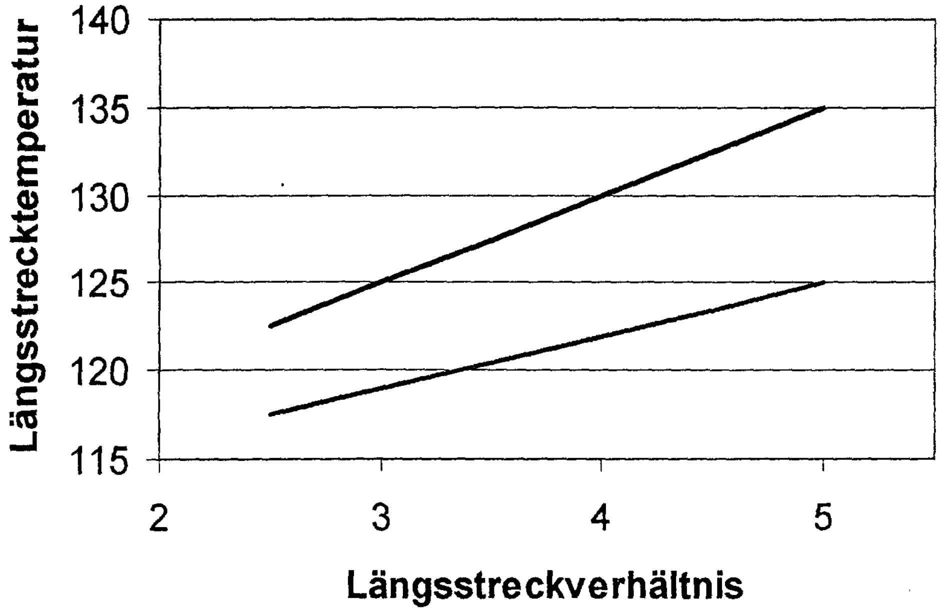
Längsstrecktemperatur
140
135
130
125
120
115
2
3
4
5
Längsstreckverhältnis

Fig. 2

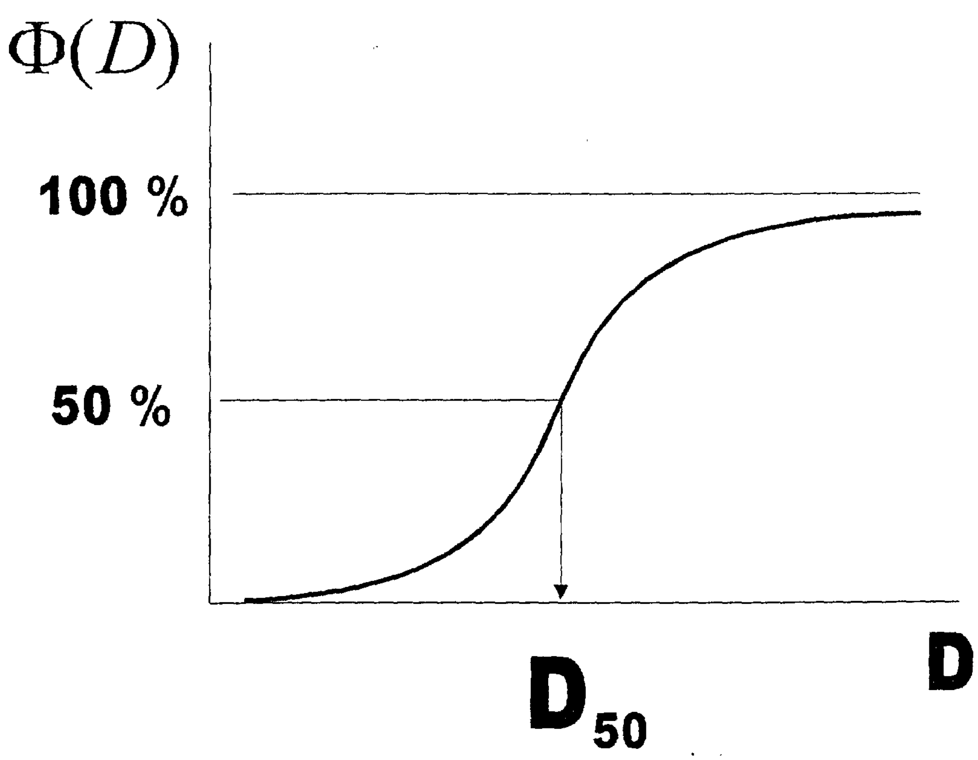
Φ(D)
100 %
50 %
D
D50

Fig. 3